# EUROPÄISCHE PATENTANMELDUNG

(11) **EP 2 837 487 A2**
(43) Veröffentlichungstag der Anmeldung: **18.02.2015**
(21) Anmeldenummer: 14180779.2
(22) Anmeldetag: 13.08.2014
(51) Int. Cl.: B29C 49/42

(54) **Vorrichtung und Verfahren zum Erwärmen von Kunststoffvorformlingen mit veränderter Teilung bei Vorformlingsübergabe**

(30) Priorität: 13.08.2013 DE 102013108763
(71) Anmelder: Krones AG, 93073 Neutraubling (DE)
(72) Erfinder: Schönberger, Wolfgang, 93073 Neutraubling (DE)
(74) Vertreter: Hannke, Christian

(57) **Zusammenfassung**

Vorrichtung (1) zum Erwärmen von Kunststoffvorformlingen (10) mit einer Transporteinrichtung (2), welche die Kunststoffvorformlinge (10) entlang eines vorgegebenen Transportpfades (T) transportiert und welche ein erstes umlaufendes Transportmittel (4) aufweist, an dem eine Vielzahl von Halteelementen (44) zum Halten der Kunststoffvorformlinge (10) angeordnet ist, mit wenigstens einer Erwärmungseinrichtung (12), welche die Kunststoffvorformlinge (10) zumindest zeitweise während ihres Transports erwärmt, wobei der Transportpfad (T) einen ersten Abschnitt (T1) mit einer ersten Krümmung aufweist sowie einen zweiten Abschnitt (T2) mit einer zweiten Krümmung, welche von der ersten Krümmung abweicht, aufweist. Erfindungsgemäß weist die Transporteinrichtung (2) ein zweites Transportmittel (6) aufw, an dem eine Vielzahl von zweiten Halteelementen (64) zum Halten der Kunststoffvorformlinge angeordnet ist, wobei sich in einem vorgegebenen Abschnitt (T1 a) die zweiten Transportmittel (64) mit den ersten Transportmitteln (44) mitbewegen.

## Beschreibung

Die vorliegende Erfindung bezieht sich auf eine Vorrichtung und ein Verfahren zum Erwärmen von Kunststoffvorformlingen. Im Bereich der Getränke herstellenden Industrie ist es bekannt, dass zunächst Kunststoffvorformlinge erwärmt werden und dann anschließend in diesem erwärmten Zustand, beispielsweise von einer Streckblasmaschine, zu Kunststoffbehältnissen umgeformt bzw. expandiert werden. Üblicherweise werden dabei die Kunststoffvorformlinge an einer Vielzahl von Halteelementen geführt und dabei an Erwärmungseinrichtungen, beispielsweise Infraroterwärmungseinrichtungen, vorbeitransportiert.

Dabei ist es bekannt, dass bei kleinen Durchmessern der Kunststoffvorformlinge enge Teilungen der Transporteinrichtungen, beispielsweise Transportketten, vorgesehen sind. Diese sind energetisch besser, als größere Teilungen, da ein gegenseitiger Erwärmungseffekt der Kunststoffvorformlinge auftreten kann und nicht zu viel Wärme zwischen den jeweiligen Kunststoffvorformlingen entweichen kann. Weiterhin sind Entwicklungen hin zu energieeffizienteren Verfahren und Techniken bekannt.

Dabei werden üblicherweise kontinuierlich die Ausstoßleistungen von nachfolgenden Maschinen, wie beispielsweise Streckblasmaschinen nach oben weiter entwickelt. Im Stand der Technik erfolgt dabei üblicherweise eine Übergabe der Kunststoffvorformlinge direkt von einer Halteeinrichtung, wie etwa einem Heizdorn, über eine Klammer eines weiteren Transportsterns, wie beispielsweise eines Teilungsverzugssterns.

Im Zusammenhang mit diesen Entwicklungen stellt sich jedoch das Problem, dass sich bei der Entladung der Kunststoffvorformlinge in, bzw. aus der Maschine, bzw. zwischen einzelnen Modulen der Maschine, die Übergabe erschwert. Mit anderen Worten wird insbesondere bei immer engeren Transporteinrichtungen bzw. Kettenteilungen in der Erwärmungsvorrichtung die Übergabe der Kunststoffvorformlinge von der Erwärmungseinrichtung an eine nachfolgende Vorrichtung zum Umformen der Kunststoffvorformlinge zu Kunststoffbehältnissen erschwert und kann sogar soweit erschwert werden, dass eine vernünftige Übergabe mittels Klammern nicht mehr möglich ist. Bei der im Stand der Technik vorgesehenen Übergabe mittels Klammern greift eine aktiv geschaltete Klammer in eine Mündungsnut des Kunststoffvorformlings ein, umgreift diese bis hinterhalb eines Kunststoffvorformlingsmittelpunkts und haltert den Kunststoffvorformling somit.

Durch das Aufschalten und das Umklammern des Kunststoffvorformlings muss allerdings ein gewisses Mindestmaß an Raum zwischen den Kunststoffvorformlingen, beispielsweise in einer Transportkette, vorhanden sein (dies entspricht einer Kettenteilung), um dies noch sinnvoll zu gewährleisten. Dieses Problem wirkt einer beliebigen Verkleinerung einer Kettenteilung entgegen.

Daneben stellen auch immer höhere Maschinenleistungen ein Problem bei dieser Art der Übergabe der Kunststoffvorformlinge dar. Der Kunststoffvorformling steckt üblicherweise während des Transports in der Erwärmungseinrichtung an einer Halteeinrichtung, insbesondere einem Heizdorn. Bevor der Kunststoffvorformling an eine Klammer, beispielsweise eines Teilungsverzugssterns, der Blasmaschine übergeben werden kann, muss folglich auch der besagte Heizdorn zuvor aus der Mündung des Kunststoffvorformlings herausgezogen werden. Dies erfolgt im Stand der Technik üblicherweise über eine Kurvensteuerung in einem Steuerkopf der Erwärmungseinrichtung und durch das Mitbegleiten einer Klammer des Teilungsverzugssterns. Da der Weg, den die Klammer an einem Teilkreis des Steuerkopfes mitbegleiten kann, sehr begrenzt ist, muss auch das Herausziehen des Heizdorns in einer davon abhängigen kurzen Zeitspanne erfolgen. Dies wird im Stand der Technik üblicherweise über eine Steigung der Kurvenlaufbahn realisiert. Dabei kann jedoch diese Steigung nicht beliebig groß gewählt sein, bzw. beliebig steil sein und somit ist auch die Leistung nach oben hin begrenzt.

Der vorliegenden Erfindung liegt daher die Aufgabe zugrunde, eine Möglichkeit zu schaffen, um die Leistung, bzw. die Maschinenleistung bei derartigen Maschinen noch weiter zu erhöhen sowie bevorzugt gleichzeitig die Energieeffizienz der Erwärmungseinrichtung zu verbessern.

Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfades transportiert und welche ein umlaufendes Transportmittel aufweist, an dem eine Vielzahl von Halteelementen zum Halten der Kunststoffvorformlinge angeordnet ist. Weiterhin weist die Vorrichtung wenigstens eine Erwärmungseinrichtung auf, welche die Kunststoffvorformlinge zumindest zeitweise während ihres Transports erwärmt. Dabei weist der Transportpfad einen ersten Abschnitt auf, der einen ersten Verlauf bzw. erste Krümmung aufweist sowie einen zweiten Abschnitt, der einen zweiten Verlauf bzw. eine zweite Krümmung aufweist, welche von der ersten Krümmung abweicht.

Es wird darauf hingewiesen, dass auch ein Verlauf mit einer bestimmten Krümmung auch ein geradliniger Verlauf, also ein Verlauf mit einer Krümmung mit einem unendlichen Krümmungsradius verstanden wird. Damit unterscheiden sich die Abschnitte des Transportpfades insbesondere hinsichtlich der Krümmungsradien dieser Abschnitte. Bevorzugt weist die Erwärmungsvorrichtung mindestens drei, insbesondere vier Transportabschnitte auf, die unterschiedliche Krümmungen aufweisen. Besonders bevorzugt handelt es sich bei dem ersten Transportabschnitt, welcher sich am Einlauf der Erwärmungsvorrichtung befindet, um einen geradlinigen Transportabschnitt. Der sich anschließende zweite Transportabschnitt ist insbesondere als Umlenkung ausgebildet, also gekrümmt. Im zweiten Transportabschnitt kann es sich insbesondere um eine im Wesentlichen kreisförmige Transportbahn handeln. Im Anschluss daran befindet sich eine bevorzugt geradlinige Transportbahn. Im Auslauf der Erwärmungsvorrichtung befindet sich insbesondere eine weitere Umlenkung, die bevorzugt eine im Wesentlichen kreisförmige Transportbahn enthält. Vorteilhaft werden die Kunststoffvorformlinge von dem ersten Transportmittel im Wesentlichen in einer Ebene transportiert. Es wäre jedoch auch denkbar, dass die Verläufe in beiden Abschnitten endliche Krümmungsradien aufweisen oder sich (stetig) ändernde Krümmungsradien vorgesehen sind.

Erfindungsgemäß weist die Transporteinrichtung ein zweites Transportmittel auf, an dem eine Vielzahl von zweiten Halteelementen zum Halten der Kunststoffvorformlinge angeordnet ist, wobei sich in einem vorgegebenen Abschnitt des Transportpfades die zweiten Transportmittel mit den ersten Transportmitteln mitbewegen.

Es wird daher vorgeschlagen, die Übergabe der Kunststoffvorformlinge dadurch zu erleichtern, dass die ersten und die zweiten Halteelemente sich wenigstens abschnittsweise bzw. zeitweise miteinander mitbewegen und so die Übergabe der Kunststoffvorformlinge leicht von den ersten Halteelementen an die zweiten Halteelemente durchgeführt werden kann. Bevorzugt werden die Kunststoffvorformlinge auf einer gekrümmten, insbesondere im Wesentlichen kreisförmigen oder elliptischen, Transportbahn zumindest zeitweise zeitgleich von zwei im Wesentlichen übereinander angeordneten Halteelementen gehaltert. Bevorzugt sind die Halteelemente koaxial übereinander angeordnet. Unter einem Transportpfad, der Abschnitte mit unterschiedlichen Krümmungen aufweist, wird damit insbesondere jeglicher Transportpfad verstanden, der nicht kreisförmig ausgebildet ist. So kann es sich beispielsweise um einen ovalen Transportpfad handeln, aber auch um einen Transportpfad, der zwei gekrümmte und zwei geradlinige Abschnitte aufweist.

Vorteilhaft handelt es sich bei den ersten Halteelementen um Dorne, welche in Mündungen der Kunststoffbehältnisse einführbar sind. An diesen Dornen werden die Kunststoffvorformlinge vorteilhaft während ihrer Erwärmung geführt. Dabei sind vorteilhaft diese Dorne auch drehbar ausgeführt, sodass die Kunststoffvorformlinge auch während ihrer Erwärmung um ihre eigene (Längs-)Achse gedreht werden können.

Vorteilhaft handelt es sich bei den zweiten Halteelementen um Halteklammern, welche die Kunststoffvorformlinge an einem Bereich ihrer Außenoberfläche, beispielsweise unterhalb ihres Tragrings, greifen können.

Bei einer weiteren vorteilhaften Ausführungsform sind die zweiten Halteelemente unterhalb der ersten Halteelemente angeordnet, falls die Kunststoffvorformlinge mit ihren Mündungen nach oben transportiert werden. So kann beispielsweise ein Fächerstern, der unterhalb des Steuerkopfes des Heizofens, das heißt auch unterhalb des ersten Transportmittels, angeordnet ist, sich synchron mit den Halteelementen, das heißt den ersten Halteelementen, mit der Heizdornkette bewegen. In einer konkreten Ausgestaltung kann in einem Einlauf bzw. Tangentialpunkt dieses Steuerkopfes das Klammersegment oder Führungssegment bzw. eine Führungstasche dem Kunststoffvorformling an seinem Tragring haltern. Auch wäre ein Eingriff bzw. ein Haltern an der Verschlussringnut denkbar. Vorteilhaft hält das zweite Halteelement den Kunststoffvorformling auch von innen her auf einer Kreisbahn bzw. einer vorgegebenen Transportbahn eines Kunststoffvorformlingsteilkreises. Unter einem Halten von innen her wird dabei verstanden, dass das Halteelement bezüglich der Transportbahn des Kunststoffvorformlings radial innen angeordnet ist und bevorzugt zumindest einen Bereich des Kunststoffvorformlings kontaktiert, der radial weiter innen umläuft als eine geometrische Längsachse des Kunststoffvorformlings. Weiterhin ist es noch möglich, dass die Bewegung der Kunststoffvorformlinge nach radial außen hin, beispielsweise durch einen Führungsbogen, das heißt ein Formatteil, abgestützt wird. Alternativ ist es auch möglich, dass die zweiten Halteelemente an einem Gewinde der Kunststoffvorformlinge angreifen, um die Kunststoffvorformlinge zu halten.

Sobald die zweiten Halteelemente an den jeweiligen Kunststoffvorformlingen anliegen, kann mit einem Herausziehen der ersten Halteelemente bzw. der Heizdorne aus der Mündung der Kunststoffvorformlinge begonnen werden. Dadurch, dass sich die ersten und die zweiten Halteelemente in einem vorgegebenen Abschnitt miteinander bewegen bzw. die zweiten Halteelemente sich mit den ersten Halteelementen mitbewegen, wird der Kunststoffvorformling einerseits gehaltert und es steht im Vergleich zu Ausführungsformen nach dem Stand der Technik sehr viel Zeit zur Verfügung, um die ersten Halteelemente von dem Kunststoffvorformling zu entfernen bzw. die Heizdorne aus der Mündung zu ziehen. Dies wirkt sich insbesondere bei hohen Maschinenleistungen sehr positiv auf die Kurven-/ Rollen-/Kraftverhältnisse aus. Außerdem wird hierdurch auch das Problem des heute bereits problematischen Mitbegleitens von Schwenkarmen eines Teilungsverzugssterns bei der Übergabe der Kunststoffvorformlinge gelöst.

Bevorzugt steht auch für die Übergabe der Kunststoffvorformlinge an einen weiteren Transferstern mehr Zeit zur Verfügung, weil mit den unteren Klammern bzw. den zweiten Halteelementen die Kunststoffvorformlinge radial nach außen geschoben werden und somit kurzfristig die Teilung vergrößert wird.
Zudem steht mehr Zeit für den Teilungsverzugsstern zur Verfügung, um zwischen die Kunststoffvorformlinge einzugreifen- weil (bedingt durch das radiale Ausstellen) mehr Platz zwischen den Kunststoffvorformlingen entsteht.

Nachdem das erste Halteelement von der Mündung entfernt wurde, bzw. der Heizdorn aus der Mündung gezogen wurde, wird der Kunststoffvorformling bevorzugt über einen Fächerstern bevorzugt wieder auf Teilung gehalten bzw. eine Teilung zwischen den Kunststoffvorformlingen vergrößert. Damit wird die Teilung also vergrößert, um die Übergabe an den Teilungsverzugsstern zu erleichtern, gleichzeitig aber die Teilung innerhalb des Ofens aufgrund der Energieeffizienz gering halten zu können und ein sauberes Lösen des Kunststoffvorformlings von seinem Halteelement bzw. Dorn zu ermöglichen.

Bei einer weiteren vorteilhaften Ausführungsform schließt sich an die zweite Transporteinrichtung eine weitere Transporteinrichtung an, welche die Kunststoffvorformlinge an eine nachgeordnete Maschine, insbesondere eine Umformungseinrichtung zum Umformen von Kunststoffvorformlingen zu Kunststoffbehältnissen und insbesondere eine Blasformmaschine übergibt. Bei dieser weiteren Transporteinrichtung kann es sich beispielsweise um einen Teilungsverzugsstern handeln. Bevorzugt greift der der Erwärmungsvorrichtung nachgeordnete Teilungsverzugsstern die Kunststoffvorformlinge an deren Außenbereichen, insbesondere im Bereich ihrer Mündung bzw. ihres Tragrings.

Ein derartiger Teilungsverzugsstern wird bevorzugt eingesetzt, da eine nachgeordnete Anlage, wie insbesondere aber nicht ausschließlich eine nachgeordnete Umformungseinrichtung zum Umformen von Kunststoffvorformlingen zu Kunststoffbehältnissen, wie etwa eine Streckblasmaschine eine andere Teilung zwischen den Kunststoffvorformlingen erfordert als die hier beschriebene Erwärmungseinrichtung.

Bevorzugt greifen die ersten Halteelemente die Kunststoffvorformlinge in einer Mündung. Dabei können die ersten Halteelemente an einer Innenwand der Mündung der Behältnisse anliegen und diese insbesondere über einen Reibschluss halten. Anschließend werden die Kunststoffvorformlinge an die zweiten Halteelemente übergeben, bei denen es sich insbesondere um unterhalb der ersten Halteelemente angeordnete Klammern handelt, welche die Kunststoffvorformlinge von außen her greifen.

Bevorzugt halten daher die zweiten Halteelemente die Kunststoffvorformlinge in einem Außenbereich, insbesondere an einem Mündungsbereich. Unter einem Mündungsbereich wird hier (in der Längsrichtung der Kunststoffvorformlinge betrachtet derjenige Bereich verstanden, der auch ein eventuelles Gewinde sowie einen Tragring und/oder einen Sicherungsring enthält. Bevorzugt schließt sich an diesen Mündungsbereich ein zu expandierender Grundkörper des Kunststoffvorformlings an.

Zeitweise erfolgt damit eine Halterung des Kunststoffvorformlings sowohl von außen als auch von innen bzw. sowohl durch die ersten als auch die zweiten Halteelemente. Sobald die Kunststoffvorformlinge nur noch von den zweiten Haltelementen gehalten werden, können diese auch (radial) nach außen gestellt werden. In dieser ausgestellten Position können die Kunststoffvorformlinge etwa von dem oben beschriebenen Teilungsverzugsstern ergriffen werden. Diesem Teilungsverzugsstern steht dann mehr Platz und auch Zeit zur Verfügung, um die Kunststoffvorformlinge zuverlässig zu greifen.

Bei einer weiteren vorteilhaften Ausführungsform ist zumindest in dem besagten Abschnitt jedem ersten Halteelement genau ein zweites Halteelement zugeordnet. Der Kunststoffvorformling wird vorteilhaft von dem ersten Halteelement an das zweite Halteelement übergeben. Vorteilhaft wird der Kunststoffvorformling zumindest zeitweise sowohl von dem ersten Haltelement als auch von dem zweiten Halteelement gehalten. Vorteilhaft handelt es sich dabei bei dem zweiten Halteelement um ein solches Halteelement, gegenüber dem sich der Kunststoffvorformling in seiner Längsrichtung nicht bewegen kann, das heißt weder in einer Richtung noch in einer dazu entgegengesetzten Richtung.

Vorteilhaft wird der Kunststoffvorformlinge während seiner Bewegung entlang eines vorgegebenen Abschnitts des Transportpfads von beiden Halteelementen gehalten. Vorteilhaft ist dieser Abschnitt länger als 5cm, bevorzugt länger als 10cm, bevorzugt länger als 20cm. Bevorzugt wird der Kunststoffvorformling auch während eines vorgegebenen Zeitabschnitts von beiden Halteelementen gehalten. Dieser Zeitabschnitt ist größer als 0,5 sec, bevorzugt größer als 1 sec, bevorzugt größer als 2 sec und besonders bevorzugt größer als 5 sec.

Bei einer weiteren vorteilhaften Ausführungsform weist das zweite Transportmittel einen drehbaren Träger auf. Dieser drehbare Träger kann dabei die gleiche Drehachse aufweisen, welche mit der Drehachse einer Umlenkrolle, welche zum Umlenken des ersten umlaufenden Transportmittels dient, zusammenfällt.

Bei einer weiteren vorteilhaften Ausführungsform ist ein radialer Abstand der zweiten Halteelemente zu einer Drehachse des besagten drehbaren Trägers veränderbar. Durch diese Veränderbarkeit kann auch die Teilung zwischen zwei aufeinander folgenden Kunststoffvorformlingen geändert werden. So ist es beispielsweise möglich, dass, sobald die Kunststoffvorformlinge an die zweiten Halteelemente übergeben wurden, diese auch in der Teilkreisbahn nach außen geschoben werden. Damit bewegen sich die Kunststoffvorformlinge auch während ihres Transports mit den zweiten Halteelementen nicht auf einer Kreisbahn, sondern ein Teilkreisradius einer Bewegung wird während des Transports der Kunststoffvorformlinge bevorzugt verändert und besonders bevorzugt erhöht. Hierdurch erhöht sich auch die Teilung zwischen den einzelnen Kunststoffvorformlingen zu dem Zeitpunkt, zu dem sie an die weitere Transporteinrichtung übergeben werden. Diese Vergrößerung der Teilung, bzw. diese Aufspreizung der Teilung, hat den Vorteil, dass auch bei engster Teilung in dem Heiztunnel bzw. an den Erwärmungsvorrichtungen bei der Übergabe an einen Teilungsverzugsstern eine größere und insbesondere eine von der oben erwähnten ersten Kettenteilung unabhängige Teilung realisiert werden kann.

Vorteilhaft schließt sich an den Übergabeabschnitt ein Transferabschnitt an, in welchem die Kunststoffvorformlinge an eine weitere Transporteinrichtung übergebbar sind.

Vorteilhaft sind die zweiten Halteelemente an Trägerarmen angeordnet und besonders bevorzugt an einen drehbaren Hauptträger mittels dieser Trägerarme angeordnet. Dabei ist es möglich, dass diese Arme in einer radialen Richtung bezüglich der Drehrichtung dieses Hauptträgers ausstellbar bzw. wieder einziehbar sind.

Bei einer weiteren vorteilhaften Ausführungsform erstrecken sich diese Trägerarme zumindest auch in einer radialen Richtung des besagten Hauptträgers. Weiterhin sind bevorzugt Antriebseinrichtungen vorgesehen, welche die Träger ausstellen bzw. wieder in der radialen Richtung einziehen. So kann beispielsweise eine Führungskurve vorgesehen sein, welche diese Ausstellbewegung durchführt. So könnte eine derartige Führungseinrichtung in einem zentralen Bereich des Hauptträgers und insbesondere stationär angeordnet sein. Es wäre jedoch auch möglich, dass zum Ausstellen bzw. Einziehen dieser Trägerarme ein oder mehrere motorische Antriebe, wie insbesondere Linearmotoren, vorgesehen sind.

Bei einer weiteren vorteilhaften Ausführungsform ist eine Teilung zwischen zwei in der Transportrichtung der Kunststoffvorformlinge aufeinander folgenden zweiten Halteelementen veränderbar. Bevorzugt ist die Teilung während eines gekrümmten Transportabschnitts veränderbar. Dabei ist insbesondere diese Teilung durch die besagte Ausstellung bzw. durch das Einziehen der Halteelemente veränderbar, da der Radius eines Kreises, auf dem die Halteelemente bewegt werden, vergrößert oder verkleinert werden und daher auch der Abstand zweier Halteelemente in einer Umfangsrichtung dieser Kreisbahn.

Die vorliegende Erfindung ist weiterhin auf ein Verfahren zum Erwärmen von Kunststoffvorformlingen gerichtet, wobei die Kunststoffvorformlinge mittels einer Transporteinrichtung entlang eines vorgegebenen Transportpfades transportiert werden und wobei die Transporteinrichtung ein umlaufendes Transportmittel aufweist, an dem eine Vielzahl von ersten Halteelementen zum Halten der Kunststoffvorformlinge angeordnet ist. Dabei halten diese Halteelemente jeweils Kunststoffvorformlinge und die Kunststoffvorformlinge werden mit wenigstens einer Erwärmungseinrichtung zumindest zeitweise während ihres Transports erwärmt. Weiterhin weist der Transportpfad einen ersten Abschnitt auf, der eine erste Krümmung aufweist, sowie einen zweiten Abschnitt, der eine zweite Krümmung aufweist, wobei sich die zweite Krümmung von der ersten Krümmung unterscheidet. In diesem Zusammenhang wird darauf hingewiesen, dass es sich auch um eine Krümmung mit unendlichem Radius, das heißt um einen geradlinigen Verlauf handeln kann. Mit anderen Worten ist es auch denkbar und sogar bevorzugt, dass einzelne Abschnitte des Transportpfades ohne Krümmung bzw. geradlinig verlaufen.

Erfindungsgemäß wird ein Abstand zweier in der Transportrichtung aufeinander folgender Kunststoffvorformlinge wenigstens einmal während des Transports der Kunststoffvorformlinge verändert und insbesondere vergrößert. Vorteilhaft erfolgt dieses Vergrößern dieses Abstandes bzw. der Teilung insbesondere, um eine Übergabe der Kunststoffvorformlinge an eine weitere Transporteinrichtung, wie beispielsweise einen Teilungsverzugsstern, zu bewerkstelligen.

Bei einer weiteren vorteilhaften Ausführungsform weist die Transporteinrichtung zweite Halteelemente zum Halten der Kunststoffvorformlinge auf, welche sich wenigstens abschnittsweise entlang des Transportpfades der Kunststoffvorformlinge mit den ersten Halteelementen mitbewegen. Vorteilhaft werden in diesem Abschnitt die Kunststoffvorformlinge von den ersten Halteelementen an die zweiten Halteelemente übergeben. Weiterhin sind vorteilhaft Erwärmungseinrichtungen vorgesehen, welche die Kunststoffvorformlinge, insbesondere während ihres Transports, durch die Vorrichtung erwärmen. Bei diesen Erwärmungseinrichtungen kann es sich insbesondere um Infraroterwärmungseinrichtungen handeln, es könnte sich jedoch gegebenenfalls auch um eine andere Art von Erwärmungseinrichtungen handeln, wie beispielsweise Mikrowellenerwärmungseinrichtungen.

Weitere Vorteile und Ausführungsformen ergeben sich aus den beigefügten Zeichnungen. Darin zeigen:
- Fig. 1: Eine schematische Darstellung einer Vorrichtung zum Behandeln von Kunststoffbehältnissen;
- Fig. 2: eine Darstellung einer Erwärmungsvorrichtung zum Erwärmen von Kunststoffvorformlingen;
- Fig. 3: eine Detaildarstellung der in Fig. 2 gezeigten Vorrichtung;
- Fig. 4: eine Draufsicht auf einen Übergabebereich der Kunststoffvorformlinge; und
- Fig. 5: eine weitere Darstellung zur Veranschaulichung einer Vergrößerung einer Teilung zwischen Kunststoffvorformlingen.

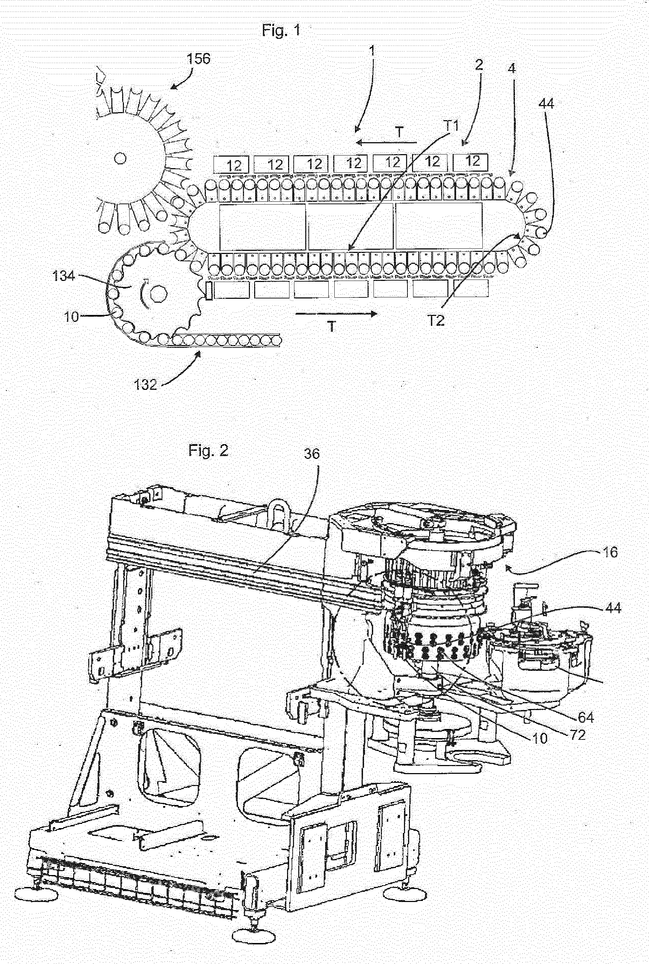

Fig. 1 zeigt eine schematische Darstellung einer Vorrichtung 1 zum Erwärmen von Kunststoffvorformlingen 10. Diese Vorrichtung 1 weist dabei eine Vielzahl von Heizelementen 12 auf, an denen vorbei die einzelnen Kunststoffvorformlinge 10 geführt werden. Während ihres Transports durch die Erwärmungsvorrichtung werden die Kunststoffvorformlinge insbesondere durch Bestrahlung, bevorzugt Infrarotstrahlung, erwärmt. Das Bezugszeichen 4 kennzeichnet ein erstes Transportmittel 4, welches zum Transportieren der Kunststoffvorformlinge 10 dient. Dieses Transportmittel 4 ist hier als umlaufende Kette ausgeführt, an der eine Vielzahl von Halteelementen 44 angeordnet ist. Bei den Halteelementen handelt es sich bevorzugt um sog. Haltedorne, die die Kunststoffvorformlinge über Reibschluss in deren Mündungsbereich haltern. Bevorzugt rotieren die Kunststoffvorformlinge während ihres Transports auf den Halteelementen um ihre Längsachse. Das Bezugszeichen T kennzeichnet einen Transportpfad der zu erwärmenden Kunststoffvorformlinge. Das Bezugszeichen 132 bezieht sich auf eine Zuführeinrichtung wie eine Zuführschiene, welche die Kunststoffvorformlinge der Vorrichtung 1 zuführt. Das Bezugszeichen 134 kennzeichnet eine Vereinzelungseinrichtung, welche die so zugeführten Kunststoffvorformlinge vereinzelt und in dieser vereinzelten Weise den einzelnen Halteelementen 44 zuführt.

Das Bezugszeichen T1 kennzeichnet einen ersten Abschnitt des Transportpfades, der hier geradlinig verläuft, also einen unendlichen Krümmungsradius aufweist. Das Bezugszeichen T2 kennzeichnet einen zweiten Abschnitt des Transportpfades, der hier eine konstante endliche Krümmung aufweist, also kreissegmentförmig ausgebildet ist.

Fig. 2 zeigt eine Darstellung der in Fig. 1 gezeigten Vorrichtung, wobei jedoch das Transportmittel in Form einer Transportkette nicht dargestellt ist. Dargestellt ist jedoch der hintere Umlenkbereich 16, in dem die Kunststoffvorformlinge wieder der Vorrichtung entnommen werden können. Man erkennt hier die ersten Halteelemente 44, bei denen es sich hier um Haltedorne handelt, die in die Mündungen der Behältnisse eingeführt werden und diese so führen.

Das Bezugszeichen 64 kennzeichnet grob schematisch zweite Halteelemente, welche hier an einem drehbaren Träger angeordnet sind. Unterhalb des Trägers ist eine Antriebswelle 72 erkennbar, welche diesen Träger antreibt.

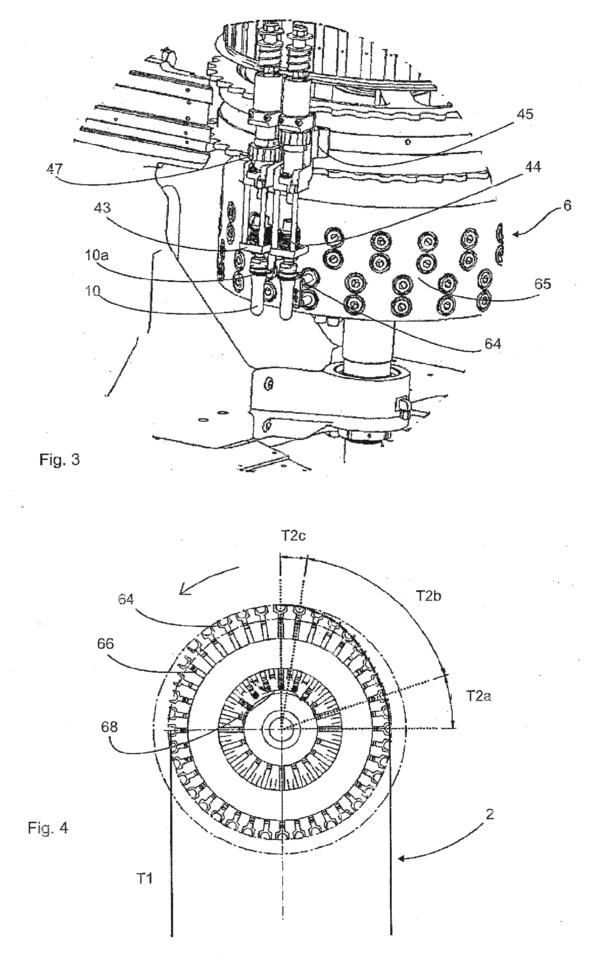

Fig. 3 zeigt eine Detaildarstellung der in Fig. 2 gezeigten Vorrichtung. Man erkennt hier, dass die ersten Halteelemente 44 drehbar gelagert sind, wobei die Drehung durch ein Zahnrad 47 hervorgerufen werden kann, welches während der Erwärmung gegenüber einer (nicht gezeigten) Verzahnung abrollt. Das Bezugszeichen 45 kennzeichnet einen Haltearm, an dem die einzelnen Halteelemente 44 angeordnet sind. Das Bezugszeichen 43 kennzeichnet ein Abschirmelement, welches während des Erwärmungsprozesses übermäßige Wärme von den Gewinden der Kunststoffvorformlinge abhält, da diese nicht erwärmt und/oder expandiert werden sollen.

Das Bezugszeichen 10a kennzeichnet einen Tragring, der üblicherweise an den Vorformlingen vorhanden ist, und an den beispielsweise das zweite Halteelement 64 angreifen kann. Das Bezugszeichen 6 kennzeichnet damit das zweite Transportmittel in seiner Gesamtheit. Der drehbare Träger, an dem die einzelnen Halteelemente 64 angeordnet sind, ist mit dem Bezugszeichen 65 versehen.

Fig. 4 zeigt eine weitere Darstellung der erfindungsgemäßen Vorrichtung. Man erkennt, dass hier die Halteelemente 64 jeweils an Haltearmen 66 angeordnet sind und diese Haltearme hier insbesondere mittels einer Führungskurve 68 radial nach außen gestellt werden können, um so die Teilung zwischen den einzelnen Halteelementen und damit auch den daran gehaltenen Kunststoffvorformlingen zu vergrößern. Die Bezugszeichen T2a, T2b und T2c zeigen unterschiedliche Abschnitte des Transportpfades. In dem Abschnitt T2a bewegen sich die zweiten Halteelemente 64 mit den (nicht gezeigten) ersten Halteelementen 44 mit. In diesem Bereich können die Kunststoffvorformlinge von den ersten Halteelementen 44 an die zweiten Halteelemente 64 übergeben werden bzw. werden die Kunststoffvorformlinge hier zusätzlich von dem ersten Halteelement 44 auch zeitweise gleichzeitig von dem zweiten Halteelement gehalten. Dann werden die ersten Halteelemente 44, angesteuert durch eine Kurve, aus den Kunststoffvorformlingen gezogen. In dem Abschnitt T2b werden, wie in Fig. 4 erkennbar, die einzelnen zweiten Halteelemente 64 radial nach außen geschoben und auf diese Weise wird einerseits der Teilkreisradius, auf dem sich die Kunststoffvorformlinge bewegen, vergrößert und andererseits auch der Abstand zwischen den einzelnen Halteelementen. In dem Bereich T2c sowie in dem sich daran anschließenden Bereich ist der Abstand zwischen den Halteelementen am größten. Bevorzugt greifen die Klammern des Teilungsverzugssterns innerhalb dieses Bereichs in die Freiräume zwischen den Kunststoffvorformlingen. Die Klammern haben in diesem Bereich ausreichend Platz und Zeit, um den Kunststoffvorformling sicher zu greifen. Es wäre aber auch denkbar, dass die Halteelemente des Teilungsverzugssterns die Kunststoffvorformlinge bereits in dem Bereich T2b greifen. Das Bezugszeichen T1 kennzeichnet einen weiteren Bereich des Transportpfades, an dem die Kunststoffvorformlinge hier geradlinig gefördert werden.

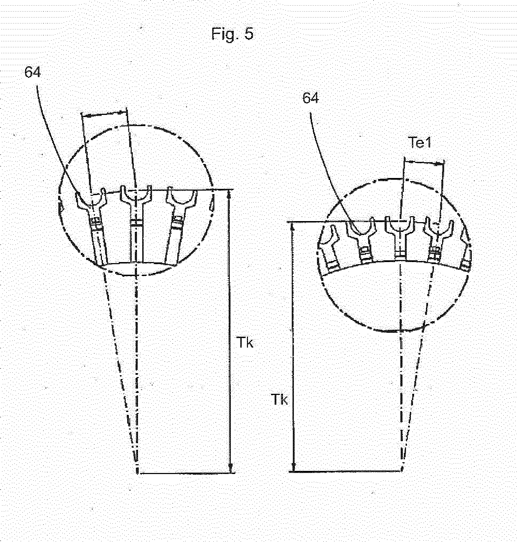

Fig. 5 zeigt eine weitere Darstellung zur Veranschaulichung der Teilung. Man erkennt, dass bei der linken Darstellung die einzelnen Haltearme teleskopartig bzw. radial nach außen geschoben sind und damit der Abstand zwischen zwei Halteelementen 64 in Umfangsrichtung größer ist, als in der in der rechten Figur dargestellten Situation. Das Bezugszeichen Tk kennzeichnet wiederum einen Teilkreisradius, auf dem sich die einzelnen Halteelemente 64 bewegen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Erwärmungsvorrichtung
- 4: erstes Transportmittel
- 6: zweite Transportmittel
- 10: Kunststoffvorformlinge
- 10a: Tragring
- 12: Heizelemente
- 16: hinterer Umlenkbereich
- 43: Abschirmelement
- 44: erste Halteelemente
- 45: Haltearm
- 47: Zahnrad
- 64: zweite Halteelemente
- 65: drehbarer Träger
- 66: Haltearme
- 68: Führungskurve
- 72: Antriebswelle
- 132: Zuführeinrichtung
- 134: Vereinzelungseinrichtung

- T: Transportpfad
- T1: weiterer Bereich des Transportpfades
- T2a, T2b, T2c: Abschnitte des Transportpfades
- Tk: Teilkreisradius

## Patentansprüche

1. Vorrichtung (1) zum Erwärmen von Kunststoffvorformlingen (10) mit einer Transporteinrichtung (2), welche die Kunststoffvorformlinge (10) entlang eines vorgegebenen Transportpfades (T) transportiert und welche ein erstes umlaufendes Transportmittel (4) aufweist, an dem eine Vielzahl von ersten Halteelementen (44) zum Halten der Kunststoffvorformlinge (10) angeordnet ist, mit wenigstens einer Erwärmungseinrichtung (12), welche die Kunststoffvorformlinge (10) zumindest zeitweise während ihres Transports erwärmt, wobei der Transportpfad (T) zumindest einen ersten Abschnitt (T1) mit einer ersten Krümmung sowie zumindest einen zweiten Abschnitt (T2) mit einer zweiten Krümmung, welche von der ersten Krümmung abweicht, aufweist, **dadurch gekennzeichnet, dass**
die Transporteinrichtung (2) ein zweites Transportmittel (6) aufweist, an dem eine Vielzahl von zweiten Halteelementen (64) zum Halten der Kunststoffvorformlinge angeordnet ist, wobei sich in einem vorgegebenen Abschnitt (T1 a) die zweiten Transportmittel (64) mit den ersten Transportmitteln (44) mitbewegen.

2. Vorrichtung (1) nach Anspruch 1,
**dadurch gekennzeichnet, dass**
zumindest in diesem vorgegebenen Abschnitt (T1a) jedem ersten Halteelement (44) genau ein zweites Halteelement (64) zugeordnet ist.

3. Vorrichtung (1) nach Anspruch 1, **dadurch gekennzeichnet, dass** die ersten Halteelemente (44) die Kunststoffvorformlinge in einer Mündung greifen.

4. Vorrichtung (1) nach Anspruch 1, **dadurch gekennzeichnet, dass** die zweiten Halteelemente (64) die Kunststoffvorformlinge in einem Außenbereich, insbesondere in einem Mündungsbereich greifen.

5. Vorrichtung (1) nach Anspruch 3 und 4, **dadurch gekennzeichnet, dass** die ersten Halteelemente (44) und die zweiten Halteelemente (64) die Kunststoffvorformlinge wenigstens zeitweise zeitgleich greifen.

6. Vorrichtung (1) nach wenigstens einem der vorangegangenen Ansprüche,
**dadurch gekennzeichnet, dass**
das zweite Transportmittel (6) einen drehbaren Träger (65) aufweist.

7. Vorrichtung (1) nach Anspruch 3,
**dadurch gekennzeichnet, dass**
ein radialer Abstand der zweiten Haltelemente (64) zu einer Drehachse des drehbaren Trägers (65) veränderbar, insbesondere vergrößerbar, ist.

8. Vorrichtung (1) nach wenigstens einem der vorangegangenen Ansprüche,
**dadurch gekennzeichnet, dass**
der vorgegebene Abschnitt (T1 a) ein Übergabeabschnitt (T1 a) ist, in dem die Kunststoffvorformlinge von den ersten Halteelementen (44) an die zweiten Halteelement (64) übergeben werden.

9. Vorrichtung (1) nach wenigstens einem der vorangegangenen Ansprüche,
**dadurch gekennzeichnet, dass**
sich an den Übergabeabschnitt (T1 a) ein Transferabschnitt (T1 b) anschließt, in dem die Kunststoffvorformlinge an eine weitere Transporteinrichtung übergebbar sind.

10. Vorrichtung (1) nach wenigstens einem der vorangegangenen Ansprüche,
**dadurch gekennzeichnet, dass**
die zweiten Halteelemente (64) an Trägerarmen (66) angeordnet sind.

11. Vorrichtung (1) nach wenigstens einem der vorangegangenen Ansprüche,
**dadurch gekennzeichnet, dass**
eine Teilung zwischen zwei in der Transportrichtung der Kunststoffvorformlinge aufeinanderfolgenden zweiten Haltelementen veränderbar ist.

12. Verfahren zum Erwärmen von Kunststoffvorformlingen (10), wobei die Kunststoffvorformlinge (10) mittels einer Transporteinrichtung (2) entlang eines vorgegebenen Transportpfades (T) transportiert werden, wobei die Transporteinrichtung (2) ein umlaufendes Transportmittel (4) aufweist, an dem eine Vielzahl von ersten Halteelementen (44) zum Halten der Kunststoffvorformlinge angeordnet ist, wobei diese Halteelemente (44) jeweils Kunststoffvorformlinge halten, und wobei die Kunststoffvorformlinge mit wenigstens einer Erwärmungseinrichtung (12) zumindest zeitweise während ihres Transports erwärmt werden, wobei der Transportpfad (T) zumindest einen ersten Abschnitt (T1) aufweist, der eine erste Krümmung aufweist sowie zumindest einen zweiten Abschnitt (T2) der eine zweite Krümmung, welche von der ersten Krümmung abweicht, aufweist,
**dadurch gekennzeichnet, dass**
ein Abstand zweier in der Transportrichtung aufeinander folgender Kunststoffvorformlinge (10) wenigstens einmal während des Transports der Kunststoffvorformlinge verändert und insbesondere vergrößert wird.

13. Verfahren nach Anspruch 9,
**dadurch gekennzeichnet, dass**
die Transporteinrichtung (2) zweite Halteelemente (64) zum Halten der Kunststoffvorformlinge aufweist, welche sich wenigstens abschnittsweise entlang des Transportpfads der Kunststoffvorformlinge (10) mit den ersten Halteelementen (44) mitbewegen.
